# EUROPEAN PATENT APPLICATION

(11) **EP 0 846 658 A1**
(43) Date of publication of application: **10.06.1998**
(21) Application number: 97309435.2
(22) Date of filing: 21.11.1997
(51) Int. Cl.: C01B 31/30, C01B 31/34, C22C 1/05

(54) **Method of forming metal carbides and metal carbide composites**

(30) Priority: 05.12.1996 US 761086
(71) Applicant: NANODYNE INCORPORATED, New Brunswick, New Jersey 08901-3601 (US)
(72) Inventor: Seegopaul, Purnesh, Flemington, New Jersey 08822 (US); Wu, Li, Plainsborough, New Jersey 08901 (US)
(74) Representative: Findlay, Alice Rosemary

(57) **Abstract**

The process of carburizing metals such as tungsten is greatly facilitated by forming a solution of a metal-containing compound such as ammonium paratungstate with an organic acid, and spray drying the composition to form precursor particles. The precursor particles are then calcined in an atmosphere which will cause partial carburization of the metal. Carburization is completed by heating this in a carburizing atmosphere. This is also useful for facilitating dissolution of certain metal compositions such as ammonium paratungstate, which is easily solubilized in water with the assistance of glycine. Preferably, the solution also incorporates a matrix metal composition such as a cobalt composition to form nanophase tungsten carbide particles in a cobalt matrix.

## Description

Interstitial metal carbides are formed by reacting a metal with carbon. Preferably, a salt of the metal or other metal compound is brought into contact with a carbon-containing gas at elevated temperatures -- generally 800° C or more. The compounds break down into elemental metal and carbon, which then can react to form a carbide. This reaction can be relatively slow, taking 10-12 hours or more to complete. Reaction conditions must be controlled to cause the formation of small grains. The smaller the grains, the stronger they are, and the less likely they are to fracture.

Further, many of these metal carbides are bound in a metal matrix such as cobalt or iron. In the formation of a metal carbide/binder metal complex, the carbide-forming metal composition must be intimately mixed with the matrix metal complex.

One process which permits this intimate mixing, and further provides a great deal of flexibility in controlling the molar ratio of the binder metal to the metal carbide, is a spray conversion process which is disclosed in *McCandlish* U.S. Patent 5,352,269. This discloses combining two metal salts such as tungsten salt and a cobalt salt in solution, and spray drying the solution to form fine precursor powder particles. This powder can then be subjected to a carburization process. Unfortunately, many potential starting materials do not easily dissolve in the desired media, generally water. In forming tungsten carbide, one preferred material is ammonium metatungstate, which is excellent in terms of dissolution, but is relatively expensive. A less expensive alternative is ammonium paratungstate, which is very difficult to get into solution, but is inexpensive. Of course, the spray conversion process is not designed to improve the rate of the carburization reaction.

It has been found that the rate of reduction/carburization of a metal or a metal/binder metal complex can be significantly improved by forming a solution of a metal precursor compounds and an organic carboxylic acid. This solution is dried, and the formed solid calcined in an inert atmosphere and subsequently carburized in the presence of carburization gas. Preferably, the drying is conducted by spray drying, which forms small particles which improve the carburization reaction. The calcination of the particles causes the carbon in the organic acid to reduce the calcined oxide and partially carburize the reduced mixture. This, in tum, decreases the reaction time.

Further, it has been found that the organic acid assists in the solubilization of metal compounds and, preferably ammonium paratungstate. This permits the use of different starting materials.

Preferably, the organic acid is an amino acid wherein the combination of the carboxylic acid group and the amine group further assists in stabilization of the dissolved metal compositions.

Objects and advantages of the present invention will be further appreciated in light of the following detailed description.

A metal carbide is formed by initially forming a solution which includes the desired metal, a water soluble organic acid, and optionally a composition that includes a binder metal. This solution is then dried and the formed solid is calcined in an inert environment. The calcined material is then carburized.

The metals which can be used to form carbides are those which would typically be used to form interstitial carbides. These would include tungsten, chromium, tantalum, niobium and vanadium. As elemental metals are not soluble in water, these would be put into solution by combining soluble chemical compositions which include these metals. These are referred to as metal carbide-forming compositions. Typical compositions include the metal acetates, carbonates, formates, citrates, hydroxides, nitrates, oxides, and oxalates. Specific suitable compositions include ammonium metatungstate, ammonium paratungstate, trisethylene-bis- cobalt tungstenate, ammonium vanadate, tungstic acid, chromic acetate hydroxide, niobium oxide, tantalum oxide, as well as many others.

These compositions can be carburized to form carbides or, preferably, are carburized in the presence of a binder metal such as cobalt, nickel, aluminum or iron to form carbide particles held in a binder matrix. Binder metal is added to the solution by combining soluble compounds which incorporate these elements. These are referred to as binder metal compositions. Basically the same salts as used for the carbide metals could be used for the binder metals. Suitable compounds include cobaltous chloride, cobaltous nitrate, cobaltous acetate, ferrous chloride, aluminum nitrates and nickel nitrate and acetates.

The third component of the aqueous solution is the organic acid. Generally, any lower-molecular-weight (C₁₀ or less), water-soluble organic acid will function. Particularly suitable are formic acid, acetic acid, tartaric acid, malic maleic acid, oxalic acid, propionic acid, butyric acid, and valeric acid. However, any water-soluble organic acid should function. If the acid has more than 10 carbon atoms, control of free carbon becomes a significant problem.

Particularly suitable for use in the present invention are amine substituted water-soluble organic acids and in particular the amino acids. One preferred amino acid is glycine. However, the particular amino acid should be chosen to assist in the solubilization of metal compositions. Further, combinations of acids can be employed to reduce costs and improve solubility. One preferred combination is glycine with malic acid.

The formation of the metal carbide is started by forming a precursor compound. The precursor compound is simply a solid material which includes a uniform mixture of the carbide metal composition, in combination with the binder metal composition (if present) and the organic acid. These are mixed on a molecular level by forming the solution of the carbide metal composition, organic acid and binder metal composition and then rapidly drying the solution.

The organic acid will be initially dissolved in water. It is preferable to establish a molecular ratio of acid to metal carbide atom of about 2 to about 1. However, more importantly, the organic acid is incorporated in an amount effective to assist in the dissolution of the metal carbide composition. Accordingly, the amount of organic acid is controlled to ensure complete dissolution at a minimal level of the acid.

After the organic acid is in solution, the metal carbide-forming composition is added to the aqueous solution of organic acid. This can be heated to boiling in order to assist in the solubilization of the composition. The overall amount of organic acid and the concentration of the carbide-forming metal composition is controlled to provide complete dissolution of the carbide metal-forming composition.

Finally, if a binder metal is to be employed, a binder metal composition is added to the solution in an amount effective to achieve the desired molar ratio of carbide-forming metal to binder-forming metal. Generally, with tungsten and cobalt, it is preferred to work at a cobalt level of 3-20% by weight.

This aqueous solution of carbide-forming metal, organic acid and binder metal composition is then rapidly spray dried to provide a solid which is a uniform combination of the carbide-forming metal composition, the organic acid, and the binder-forming metal composition. This can be achieved by atomized droplet drying, spray drying, or ultrasonic atomization. Preferably, however, the drying is simply conducted by spray drying. The spray drying parameter is controlled to establish precursor particles which are 100 microns or less in diameter.

The precursor solid or powder is then subjected to a calcination in an inert atmosphere. Both the calcination and the carburization reaction can be conducted in the same reactor. Generally, any reactor which permits raising the temperature and controlling the environment is acceptable for use in the present invention. A fixed bed reactor can be used. However, a reactor that provides for mixing such as a fluid bed reactor or a rotary kiln reactor are preferred since they increase gas to solid mixing and accordingly decrease reaction time.

The calcination is conducted in an inert carbon-free environment such as argon, nitrogen or a vacuum. The calcination is conducted at a temperature of from about 100° C to about 900° C and continued until the reaction is completed. Intermediate metal carbides are formed at this stage. The pressure should be at about 1-3 psig. Generally the amount of time will vary, depending upon the batch size, temperature and type of reactor, but can vary from about 1 to about 3 hours. The calcination process will provide metal compounds which are 10 to 40% carburized. The calcination is complete when the free and "bound" carbon is used up.

After the calcination is completed, the carburization process will begin. To conduct the carburization, the carburizing gas is introduced into the reactor to combine with the calcined precursor composition at a temperature of from 750° C to 900° C, preferably 775° C to 860° C. The carburizing gas is simply a gas which contains carbon. Preferred carburizing gases include a mixture of carbon monoxide and carbon dioxide, a mixture of hydrogen and carbon monoxide, as well as lower molecular weight hydrocarbons.

Initially, the carbon activity of the gas is established at greater than 1, preferably 1 to 1.4, with about 1.2 being preferred. Carbon activity of the gas can be adjusted by altering the ratio of carbon monoxide to carbon dioxide, or carbon monoxide to hydrogen. This is continued for a period of about 2 hours, and then the carbon acti-vity is reduced to below 1, preferably less than 0.5, and preferably around 0.3. When the carbon activity is greater than 1, free carbon is deposited. Establishing the carbon activity at less than 1 will then drive off this free carbon. The reduced carbon activity reaction is continued for about 0.25 hours, and then the higher activity gas is resumed. This is cycled back and forth 6 to 10 times until the reaction is complete. This reaction will produce a composition which is the metal carbide particles embedded in a matrix of the binder metal, or simply particles of the metal carbide if no binder or matrix metal is present. This composition can then be further processed by sintering to produce, for example, metal carbide cutting tools.

Objects and advantages of the present invention will be further appreciated in light of the following detailed examples which demonstrate dissolution of ammonium paratungstate by various acids.

### EXAMPLE 1

### Glycine

28.76 g glycine is added into 50 ml Dl water. The mixture is heated to about 60° C to dissolve glycine and 40 grams of APT is added while the solution is heated to 70-80° C. The mixture becomes clear in less than 30 minutes. The molecular ratio of glycine to W03 in this case is 2:1. Cobalt acetate is added to make 3-15% Co in the final WC/Co product.

### EXAMPLE 2

### Oxalic Acid

19.32 grams of oxalic acid is dissolved in 50 ml Dl water at about 45° C. 10 grams of APT is added and dissolved immediately. The molecular ratio of oxalic acid to _{WO3} in this solution is 4.0. This solution is not, however, compatible with either cobalt acetate or cobalt hydroxide. The precipitation occurs right after the addition of either cobalt salt.

### EXAMPLE 3

### Malic Acid

20.55 grams malic acid and 10 grams of APT are added into 50 ml Dl H₂O. The APT can be dissolved without heat-up in less than 30 minutes. The molecular ratio of malic acid to WO₃ in this mixture is 4.0. Cobalt acetate can be added at room temperature to have 6-15% Co.

### EXAMPLE 4

### Acetic Acid

APT is dissolved in the acetic acid aqueous solution at 100-140° C. The experiments are conducted in the autoclave reactor. 200 grams of APT, 87.71 ml of acetic acid, and 500 ml Dl water are added in to the autoclave reactor and processed at 140° C for 6 hours. 62.11% of APT is dissolved and the final 635 ml solution contains 13.78 weight percent of W. Cobalt acetate can be added at room temperature to have the needed final composition.

The dissolved APT/Co can then be spray dried and carburized.

### EXAMPLE 5

23 g of glycine and 20.5 g of malic acid are added to 50 mL of water and stirred until all the salts are fully dissolved. Rapid dissolution is achieved by raising the solution temperature to 40-50° C. 80 g of APT is then added and the suspension is heated to boiling for at least 1 hour. APT is then solubilized. 44.7 g of cobalt acetate is then added to the solution, with stirring. The temperature can be lowered during the cobalt acetate dissolution. The solution is stable at room temperature for at least 24 hours. This solution is spray dried and the precursor powder calcined in nitrogen at 860° C for 2-3 hours. Typically, about 10-25% carburization is achieved during the calcination from the "bound carbon." Introduction of the carburizing mixture (hydrogen/carbon monoxide) at 800° C then completes the carburization. The carburization reaction is continued for about 4 hours.

Using this method, the organic acid is selected to achieve optimum solubilization of the carbide-forming metal-containing composition. In the Examples, ammonium paratungstate was employed. Without use of the organic acid, it would not go into solution in an aqueous system, and therefore would not be useful in a spray drying process. Further, the incorporation of the organic acid greatly facilitates carburization during calcination, reducing overall carburization time by 40%. This, however, does not have any adverse effect on the composition. The particle size of the formed products are still nanograined size, and accordingly are particularly useful.

## Claims

1. A method of forming a metal carbide comprising forming a solution of a first metal carbide-forming composition and an organic acid, drying the solution to form a solid containing the first carbide metal-forming composition and the organic acid, calcining the solid in an inert environment to form a partially carburized first metal, and completing carburization of the partially carburized first metal by heating the partially carburized first metal in a carburizing atmosphere to form a metal carbide.

2. A method of Claim 1 wherein said first metal carbide-forming composition contains a metal selected from the group consisting of tungsten, chromium, vanadium, and niobium.

3. A method of Claim 1 or Claim 2, further comprising adding to the solution a binder metal-containing composition wherein the binder metal is effective to form a binding matrix for the metal carbide.

4. A method of Claim 3 wherein the binder metal-containing composition includes a metal selected from the group consisting of cobalt, nickel, iron and molybdenum.

5. A method of any preceding claim wherein the inert environment is selected from the group consisting of argon and nitrogen.

6. A method of any preceding claim wherein the organic acid is selected from the group consisting of an amino acid, malic maleic acid, oxalic acid, tartaric acid, acetic acid, propionic acid and formic acid.

7. A method of Claim 6 wherein the organic acid is an amino acid.

8. A method of Claim 7 wherein the amino acid is glycine.

9. A method of any preceding claim wherein the first metal carbide-forming composition is ammonium paratungstate and the organic acid is glycine.

10. A method of any preceding claim wherein the carburizing atmosphere is selected from the group consisting of a mixture of carbon monoxide and carbon dioxide, and a mixture of hydrogen and carbon monoxide.

11. A method of forming tungsten carbide in a cobalt matrix comprising combining in a solution a tungsten-containing composition, water-soluble organic acid, and a cobalt-containing composition; spray drying the solution to form precursor particles of the tungsten-containing composition, the cobalt-containing composition and the water-soluble organic acid; calcining the precursor particles to form a partially carburized tungsten composition; completing the carburization by heating the partially carburized tungsten composition in a carburizing atmosphere.

12. A method of Claim 11 wherein the organic acid is glycine and the tungsten-containing composition is ammonium paratungstate.

13. A method of Claim 11 or Claim 12 wherein the solution further includes a composition containing a metal selected from the group consisting of chromium, vanadium and niobium.
